# EUROPEAN PATENT SPECIFICATION

(11) **EP 3 645 794 B1**
(45) Date of publication and mention of the grant of the patent: **06.08.2025**
(21) Application number: 18823779.6
(22) Date of filing: 30.04.2018
(51) Int. Cl.: E02B 9/06, F03B 13/06, F03B 13/02, F03B 3/10

(54) **IMPROVED REVERSIBLE PUMP-TURBINE INSTALLATION**
VERBESSERTE UMKEHRBARE PUMPENTURBINENANLAGE
INSTALLATION POMPE-TURBINE RÉVERSIBLE AMÉLIORÉE

(30) Priority: 29.06.2017 US 201762527010 P; 26.08.2017 WO PCT/US2017/048769
(43) Date of publication of application: 06.05.2020
(73) Proprietor: Obermeyer, Henry K., Wellington, Colorado 80549 (US)
(72) Inventor: IAVORNIC, Claudiu M., Fort Collins CO 80549 (US); BAKER, Grant Quinn, Arlington VA 22204 (US); OBERMEYER, Henry K., Arlington VA 22204 (US)
(74) Representative: Richards, John
(86) International application number: PCT/US2018/030310
(87) International publication number: WO 2019/005286

(56) References cited:
- WO-A1-2012/024356
- IL-A- 98 439
- RU-U1- 54 379
- US-A- 2 246 472
- US-A- 4 004 605
- US-A- 4 804 855
- US-A1- 2015 098 793
- US-B2- 9 683 540
- ANONYMOUS: "Vertical Turbine Pumps An ITT Brand", GOULDS PUMPS, 1 January 2012 (2012-01-01), pages 1 - 20, XP055658671, Retrieved from the Internet <URL:https://www.gouldspumps.com/ittgp/medialibrary/goulds/website/Literature/Brochures/Product%20Bulletins/Alphabetical/Goulds_Vertical_Reader.pdf?ext=.pdf> [retrieved on 20200116]
- CATALOG ENTITLED 'GOULDS PUMPS - VERTICAL TURBINE PUMPS, 2012, pages 11, 12, XP055658671, Retrieved from the Internet <URL:https://www.gouldspumps.com/ittgp/medialibrary/goulds/website/Literature/Brochures/Product%20Bulletins/Alphabetical/Goulds_Vertical_Reader.pdf?ext=.pdf>
- ADAM WITT ET AL., EVALUATION OF THE FEASIBILITY AND VIABILITY OF MODULAR PUMPED STORAGE HYDRO (M- PSH) IN THE UNITED STATES, September 2015 (2015-09-01), pages 1 - 83, XP055658926, Retrieved from the Internet <URL:https:/Ihydrowise.ornl.gov/sites/default/files/2017-06/Evaluation_of_the_Feasibility_and_Viability_of_Modular_Pumped.pdf>

## Description

### FIELD OF THE INVENTION

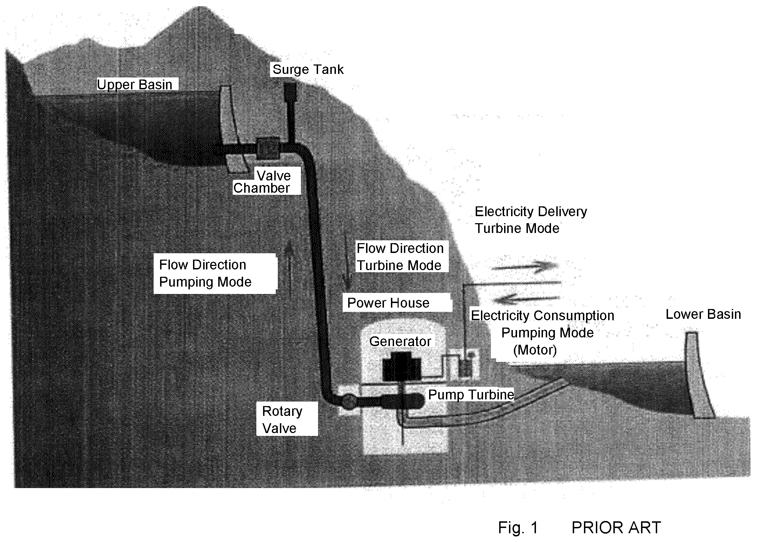

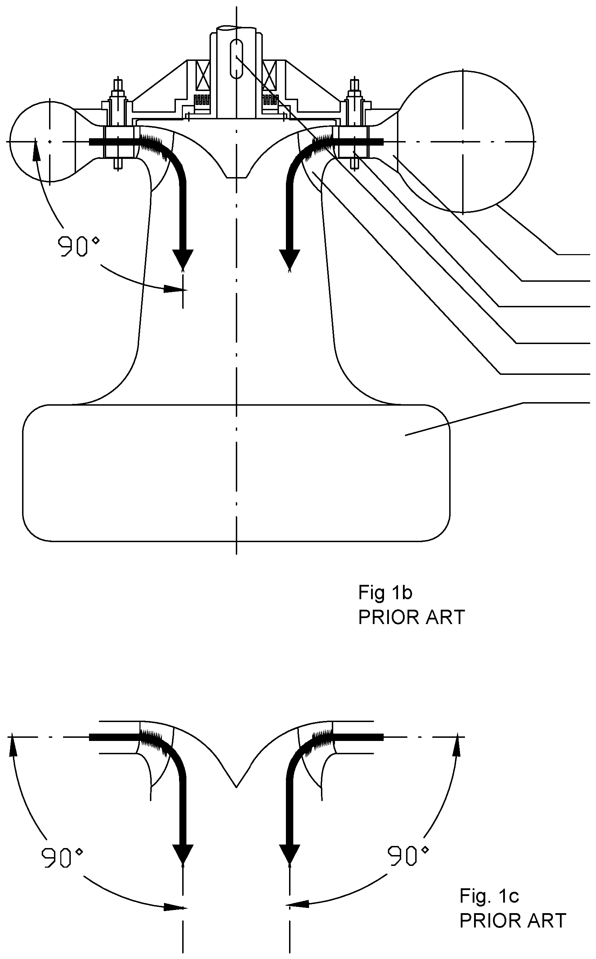

The present invention relates to reversible pump-turbines used for storage of electrical energy. Conventional pumped storage facilities as shown in Figure 1 b generally use an underground powerhouse to provide sufficient absolute pressure at the runner to prevent destructive cavitation. The elevation of the runner may be 100 meters below tailwater, for example. Constructing and maintaining such an underground facility is expensive and the expense does not decrease in proportion to size in the case of smaller facilities. There are therefore very few pumped storage facilities of less than 100 MW in North America. A typical conventional pump- turbine sectional elevation is shown in Figure 1 b. The prior art pump-turbine flow path with a 90 degree turn in the meridional plane is illustrated in Figure 1c, this being similar to the flow path in the meridional plane of a conventional Francis turbine. The present invention relates to reversible pump-turbines.

US Patent Publication 2015/0098793 describes a reversible turbine-pump system adapted for use with well liquid that is displaceable within a vertical shaft. The system includes a removable manifold that is fixed to the top of the shaft in operation.

### SUMMARY OF THE INVENTION

The invention is set out in the appended claims. Generally, it provides reversible pump-turbine located in a vertical shaft from which it is removable and further comprising a removable manifold fixed to the top of the shaft during operation wherein water flow to and from the reversible pump-turbine is through coaxial penstocks positioned in the shaft above the pump-turbine;
and wherein said pump-turbine comprises:
an impeller with a toroidal flow path through approximately 180 degrees in the meridional plane;
a diffuser-guide vane combination into which the impeller discharges; and
a tailrace connection.

The present invention establishes the required plant cavitation coefficient by positioning reversible pump-turbines with motor-generators, generally well below tailwater level in a generally vertical bore hole. Reversible pump-turbines with motor-generators will be referred to herein simply as "pump-turbines" or as "machines" The term "bore hole", rather than "shaft", is used herein to avoid confusion with the rotating shaft of the pump-turbine located therein.

Conventional pumped storage facilities position the runner well below tailwater elevation to suppress cavitation while keeping unit power and specific speed high. The critical cavitation coefficient for reversible pump-turbines is higher than it is for either turbines or pumps because the hydraulic profiles are a compromise between pumping and generating and are optimized for neither. Positioning of the runner below tailwater has heretofore required a deep and expensive excavation regardless of machine size and rating. The expense of excavation and underground construction has been cost prohibitive for small installations, of less than 100 MW, for example. Sites suitable for large installations are limited by geology, geography, competing land uses, and adequate transmission lines. Many suitable smaller scale sites exist, but existing reversible pump-turbines, even if scaled down in size and rating, still require excavation and construction costs that are prohibitive.

The proposed configuration utilizes a simple and inexpensive bore hole of perhaps 1 to 3 meters in diameter to position a high specific output reversible pump-turbine sufficiently below tailwater elevation to suppress cavitation. Such bore holes are routinely drilled as a commodity construction service for reasonable prices. A steel liner and conduits for hoisting water, electrical and control cables, for example, may be grouted in place within the bore hole. Pump-turbines adapted to this type of installation may be configured as single stage machines or may be configured as multi-stage machines utilizing specially configured "diffuser bowls" similar in function to those used on multi-stage submersible pumps. These pump-turbines would not normally use conventional scroll cases. As such, stages of these pump-turbines may be stackable to allow standard hydraulic designs to be used over a wide range of head conditions. The use of standard pump-turbine stages is further facilitated by the fact that the required plant cavitation coefficient can be achieved by simply establishing the required vertical bore hole depth. Compared to conventional underground powerhouse pump-turbine installations, there is a less frequent need to design and manufacture site specific machinery and there is no need carry the penstock nor tailrace conduit to extraordinary depths, which would be cost prohibitive in conjunction with small pumped hydro installations at most locations. The use of standard components results in increased quantities of like parts at reduced cost. Reduced costs in turn enable a greater number of projects to be built with increased part quantities.

Water flow to and from the reversible pump-turbine is through coaxial penstocks positioned in the shaft above the pump-turbine assembly. The associated motor-generator may be submersible and in certain preferred embodiments located below the pump-turbine(s). Locating the motor-generator below the pump turbines allows for a larger diameter, and therefore more economical, motor-generator for a given bore hole size. Allocating substantially all of the bore hole cross sectional area to water conveyance (up and down), rather than to space for the motor-generator, allows for the maximum power rating for a given diameter of bore hole.

The generator may alternatively be located outside of the water passageways and connected to the runner with a shaft. Such an arrangement may be cheaper than providing an underground powerhouse large enough to incorporate a scroll case, while allowing the use of a readily available air-cooled generator.

In a preferred embodiment, a removable manifold may be used to connect the inner pipe to tailwater and connect the outer pipe to the penstock leading to headwater. It is generally more efficient to connect the smaller diameter pump inlet/turbine outlet with the smaller of the coaxial pipes while connecting the larger pump outlet/turbine inlet with the larger of the two coaxial pipes. Alternative embodiments of this invention may utilize another arrangement as may be the case when multiple pump turbines might be installed, on a bulkhead, for example, in a common bore hole. The removable manifold may include an integral pneumatically controlled pressure relief valve. This integral pressure relief valve will itself reduce civil works costs by eliminating the need for a surge shaft and by reducing penstock surge pressure and penstock cost. Additionally, or alternatively, an air cushion may be left under the cover of the bore hole. Removal of the manifold allows removal of the machinery from the borehole. Dedicated hoisting equipment will facilitate installation, service, and maintenance without the need for confined space work. A water pressure actuated piston attached to the bottom of the eversible pump turbine may be used for raising and lowering. A spacer between the piston and the machine may be used to allow the machine to be raised entirely clear of the borehole.

Variable speed operation is facilitated by the ready availability of power control electronics developed for the wind industry. As in the case of wind turbine power converters, full power converters may be used in conjunction with permanent magnet motor generators and partial power converters may be used in conjunction with (generally larger) doubly fed induction generators.

The bore hole in which the reversible pump-turbine is installed may include provision for delivery of pressurized water to the bottom of the shaft, through a conduit separate from the main bore hole to hydraulically hoist the equipment for maintenance and repair and to controllably lower the equipment into operating position. The electrical power connection is preferably configured to automatically engage when the machine is lowered and to automatically disengage when the machine is raised. Such a connector may use conventional "wet mate" marine electrical connector technology or may be use a combination of compressed gas, insulating oil and inflatable seals, for example, to establish robust electrical connections isolated from ground potential.

The bore hole in which the equipment is located may terminate at the upper portal, the lower portal or at any convenient intermediate location. In the case of installation in conjunction with an existing pipeline, the vertical shaft may be located according to desired pressure profiles resulting from operation, load rejection, and other considerations. The shaft cover may incorporate a pressure relief valve and may be used to cap off a surge shaft containing air.

Multiple machines may be installed in a single shaft, on a common bulkhead, for example. The reversible pump turbines in accordance with the present invention may be used in conjunction with Pelton turbines, for example to facilitate generation at low power levels if required. The reversible pump turbines may be used in conjunction with off-stream seasonal storage reservoirs, where their primary purpose may be to raise water to the storage reservoir during high flow periods and to return water while recovering energy when stored water is required downstream.

In accordance with certain embodiments of this invention, gas pressure balanced pressure relief valves may be used to limit overpressure from water hammer.

An elbow with actuatable seals may be used in order to connect the draft tube to the tail race during operation. Inflatable seals may be used to seal the elbow in its operating position while allowing it to move freely during hoisting and lowering operations. Inflatable seals or supports may also be used to fix the machine into position during operation and to release it to allow it to be raised for maintenance.

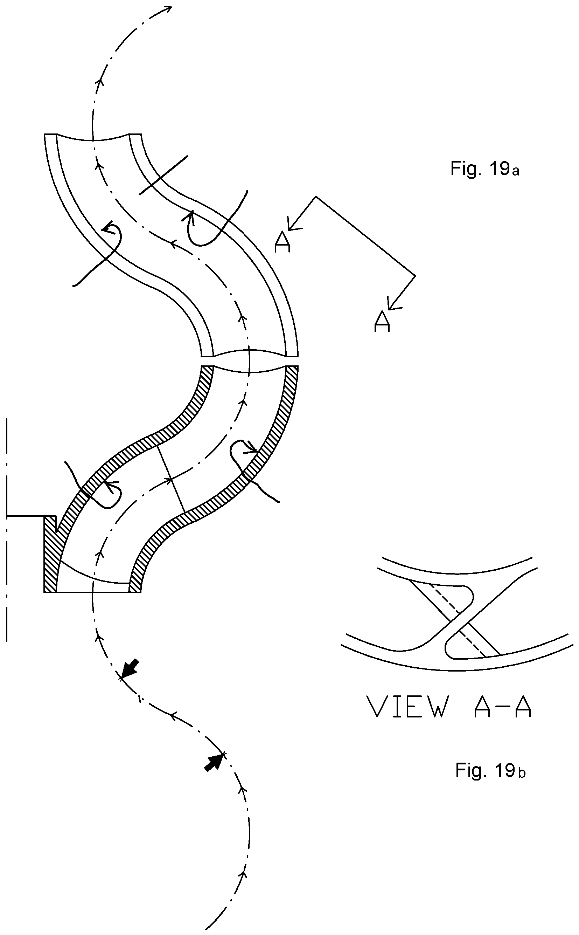

In accordance with a further aspect of the invention a reversible pump turbine runner or pump impeller is provided that imparts to the flow an upward velocity component. This upward velocity component allows the flow to proceed directly up through the diffuser or a guide vane - diffuser combination in the case of a reversible pump-turbine, or directly to a diffuser (stator) stage in the case of a multi-stage pump, while maximizing the ratio of impeller tip diameter to maximum water passageway diameter. In the case of the present invention this ratio may be 1.00. This maximizes the head per stage and allows a greater head to be achieved with a single stage machine. Figures 19a and 19b illustrate the flow in the meridional plane as well as the X - shaped appearance of the impeller blades when viewed toward the trailing edge.

### BRIEF DESCRIPTION OF THE DRAWINGS

Figure 1 is a schematic of a conventional (prior art) pumped storage facility.
Figure 1 b and 1 c are sectional elevation drawings of a conventional pump-turbine.
Figure 3a is a section through the meridional plane of a multistage pump of prior art.
Figure 3b is an elevation view of the pumped storage facility of Figure 3a shown with the pump- turbine assembly partially removed.
Figures 4a and 4b are sectional elevations of a pressure relief valve configured for use with the present invention.
Figure 5a-c are sectional elevation drawings of a reversible pump-turbine in accordance with the present invention.
Figure 6 is a cutaway rendering of a reversible pump-turbine and associated pumped storage facility useable with the present invention.
Figure 7 is a cutaway view of an elbow connection to the tailrace tunnel with an inflatable seal to secure and seal it useable with the present invention.
Figure 8 is a sectional elevation drawing of a pump-turbine installation with the vertical borehole collocated with the headworks useable with the present invention.
Figure 9 is a sectional elevation drawing of a pump-turbine installation with the vertical borehole collocated with the tailrace portal useable with the present invention.
Figure 10 is a sectional elevation drawing of a pump-turbine installation with the vertical borehole located between the headworks and the tailrace portal useable with the present invention.
Figure 11 is a sectional elevation drawing of a pump-turbine installation with the vertical borehole located in association with an underground pressured water storage cavity that serves as the "upper" reservoir.
Figure 12 is a schematic of a pump in accordance with the present invention in association with an air/water accumulator, most likely underground, and a gas turbine.
Figure 13 is a schematic of a pump in accordance with the present invention in association with an air/water accumulator, most likely underground, and a gas turbine, wherein the air may be nearly isothermally compressed with the aid of water spray cooling.

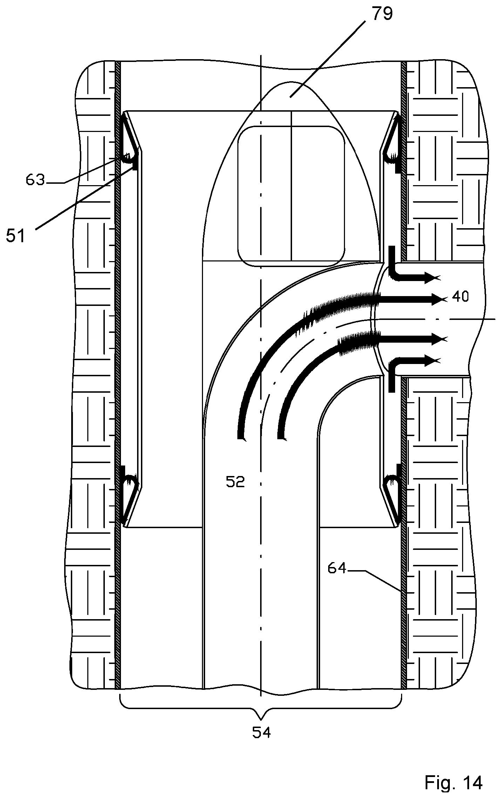

Figure 14 illustrates a tailrace connection elbow useable with the present invention that incorporates an inflatable seal that also serves as an adjustable pressure relief element. The inflatable seal (63) features a flow separation control fin 51 to reduce vibration during operation.
Figure 15 illustrates a pumped storage installation useable with the present invention including a a tailrace connection elbow.
Figure 16 illustrates a pumped storage installation useable with the present invention including a tailrace connection elbow and a penstock entering the borehole at an elevation higher than the tailrace tunnel.
Figure 17 illustrates a pumped storage installation useable with the present invention including a tailrace connection elbow.
Figure 18 illustrates a pumped storage installation useable with the present invention including a tailrace connection elbow.
Figures 19a and 19b are meridional plane sections of a multistage pump impeller in accordance with the present invention.
Figure 20 is a plan view schematic of 3 pump turbines installed in association with a single penstock and a single tailrace tunnel.
Figure 22a is a pump turbine installation including a pressure relief valve.
Figure 22b is a schematic of a torque key positioned at the bottom of a bore hole for the purpose of preventing unintended rotation of the pump-turbine.
Figure 23 is a pressure relief valve in accordance with an embodiment of the present invention.
Figure 24a and 24b is a pressure relief valve in accordance with an embodiment of the present invention shown closed and open respectively.

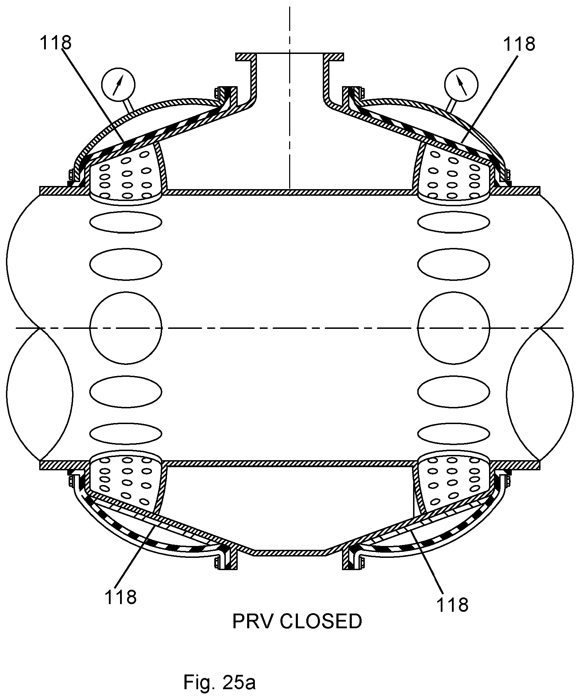

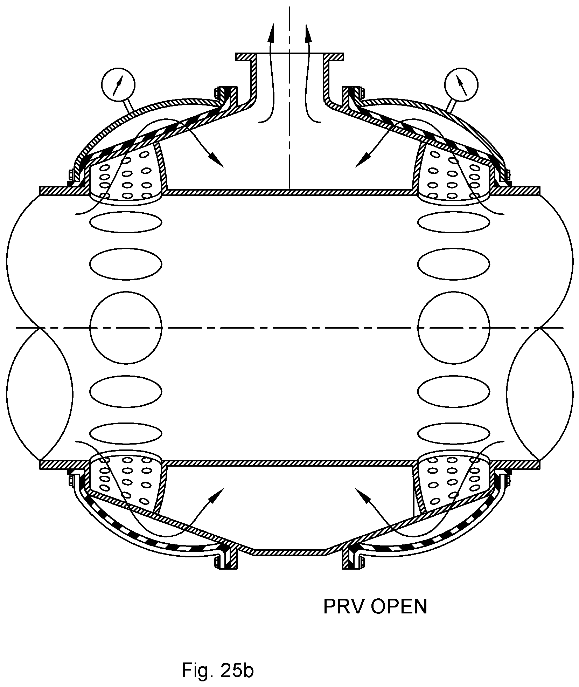

Figure 25a and 25b is a pressure relief valve in accordance with an embodiment of the present invention shown closed and open, respectively.

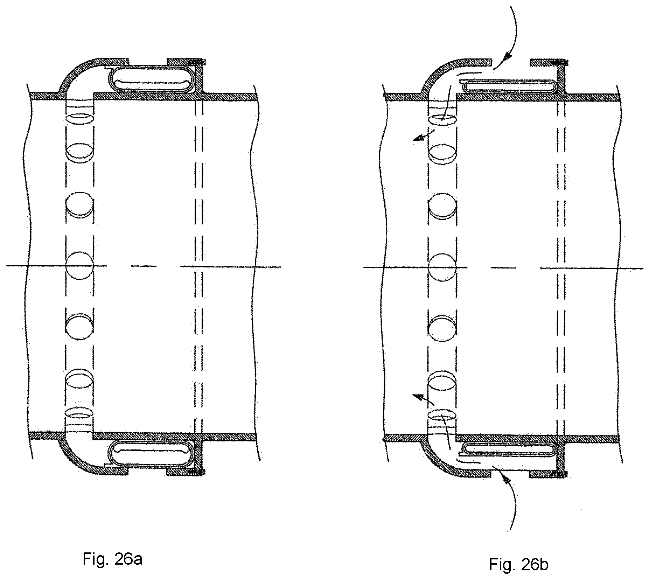

Figures 26a and 26b show a pressure relief valve in accordance with an embodiment of the present invention shown closed and open respectively.
Figures 27a and 27b show an installation of multiple pump-turbine/motor generators in a single bore hole.
Figure 28 shows schematically one version of the pump turbine of the present invention.
Figure 29 shows another version of the pump turbine of the present invention.
Figure 30 shows another version of the pump turbine of the present invention incorporating a cylinder gate rather than wicket gates.
Figures 31-37 show various installation alternatives.

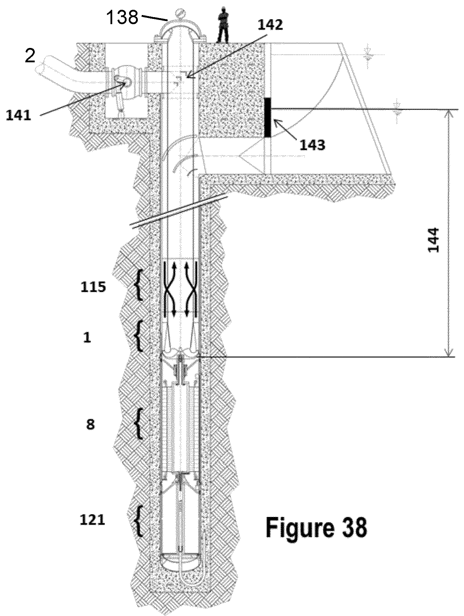

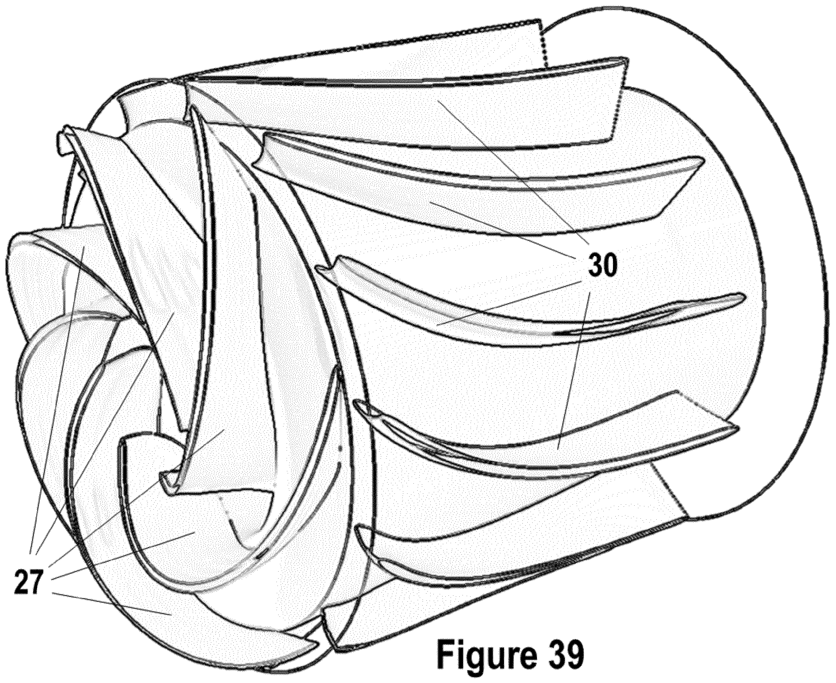

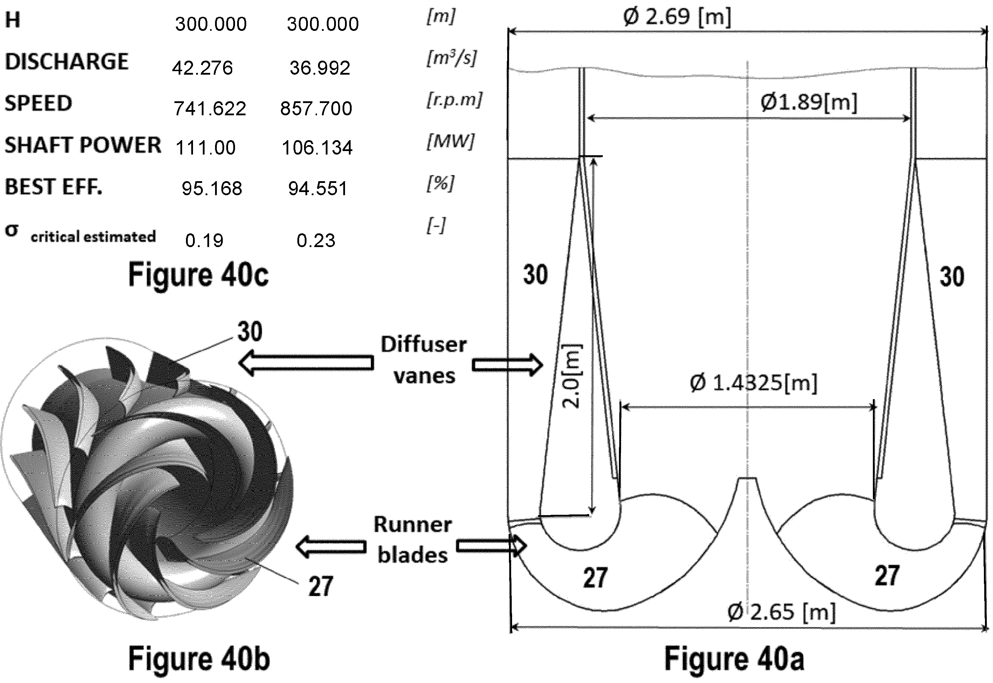

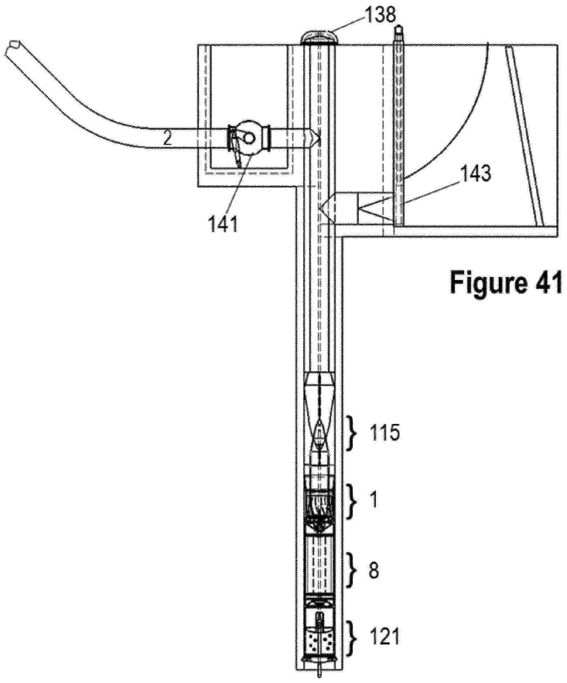

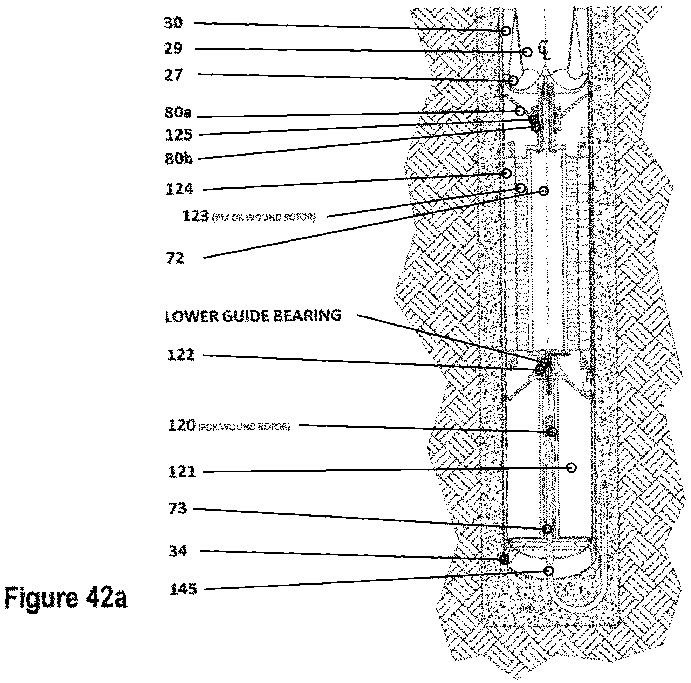

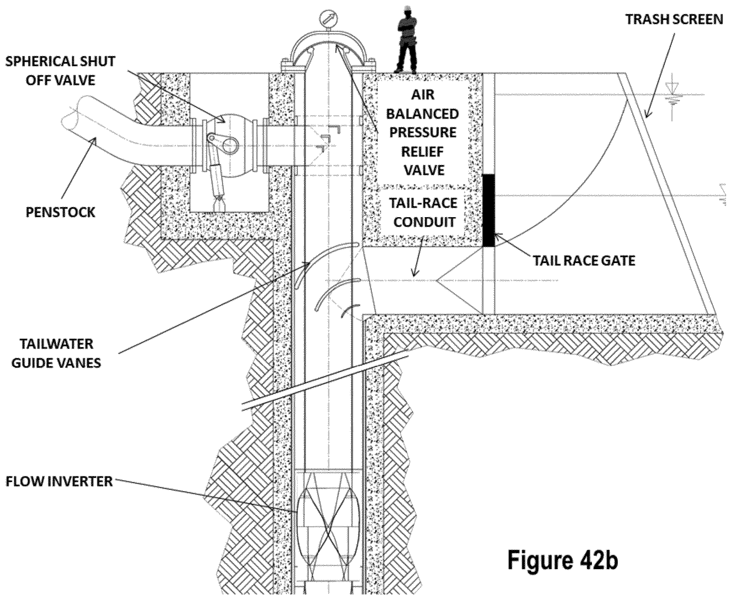

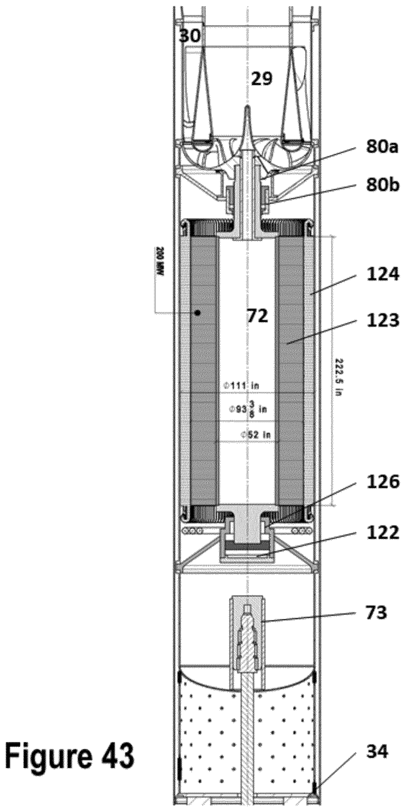

Figures 38-43 show various embodiments of a reversible pump turbine

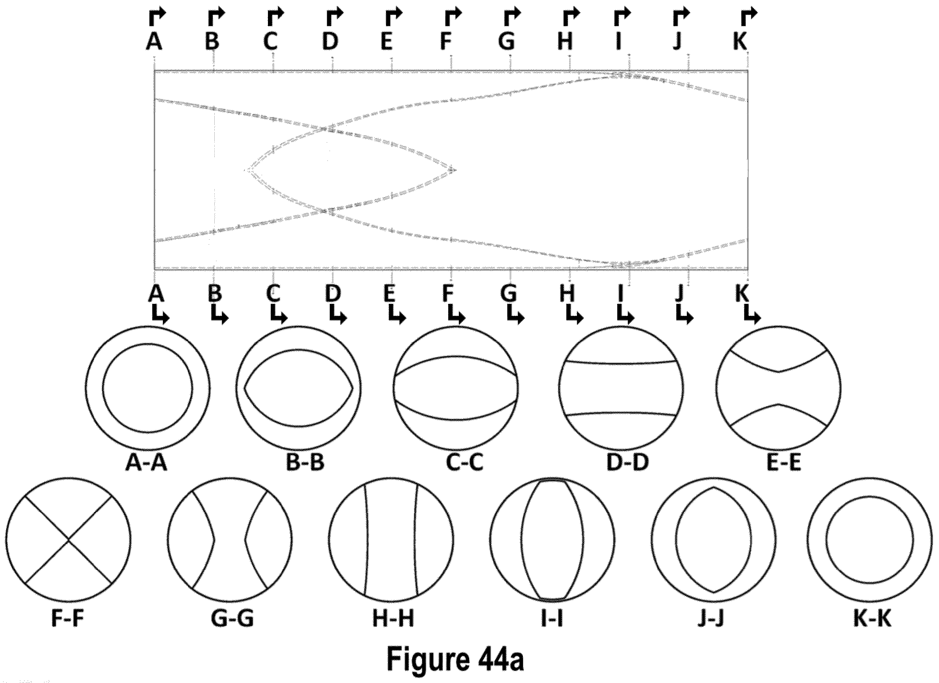

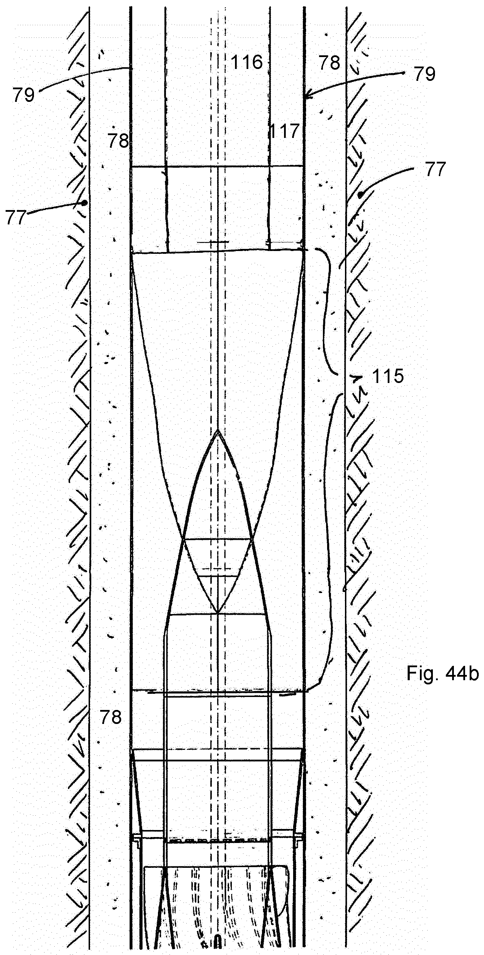

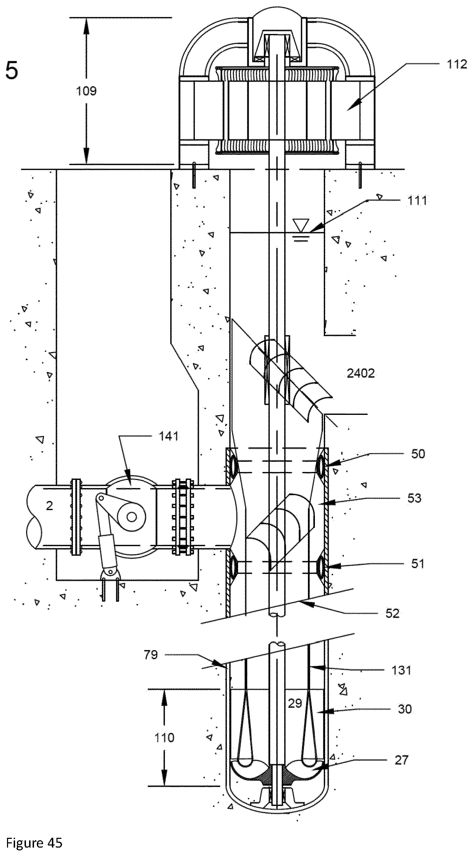

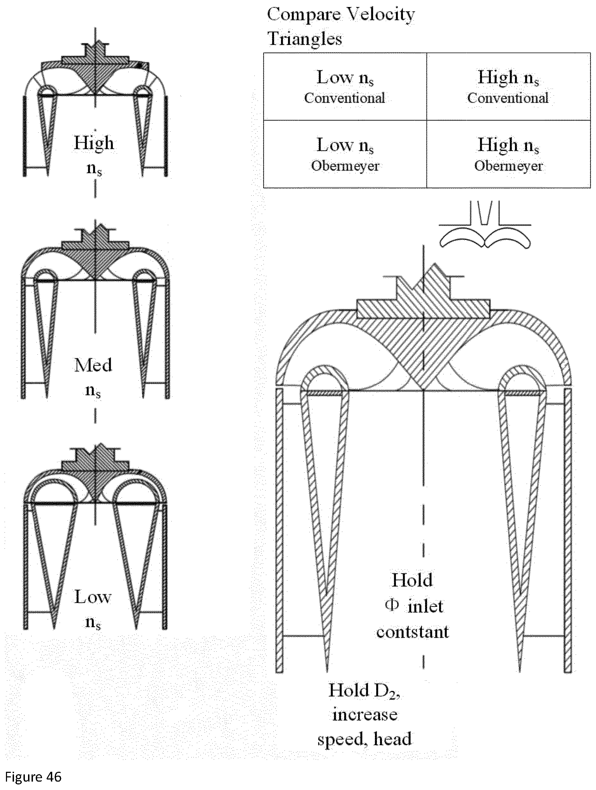

Figures 44a-b show a flow inverter section.

### DETAILED DESCRIPTION OF THE PREFERRED EMBODIMENTS

Referring to Figure 1,1b and 1c, a conventional pumped storage plant with a reversible pump-turbine is shown. There are several notably expensive features in such a conventional installation. These include:
1) A surge shaft that is typically needed to relieve waterhammer that can result from a load rejection.
2) An underground powerhouse below tailwater level. Such a powerhouse is expensive to construct and is at risk of flooding due to human error or component failure. Flooding of an underground powerhouse is a hazard to the facility itself as well as to its operators.
3) The penstock and tailrace conduit must be routed, at great expense to the same low elevation as the powerhouse itself.

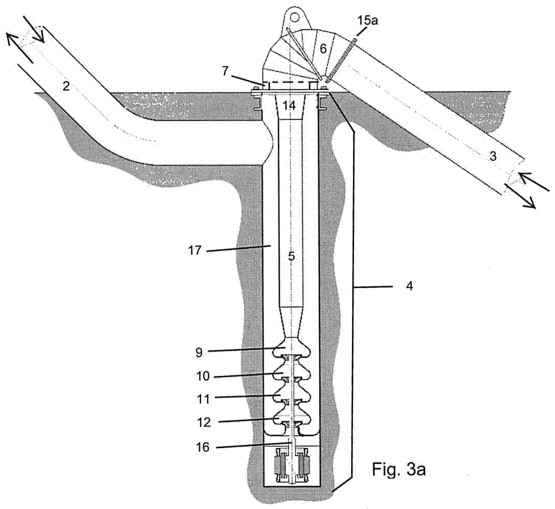

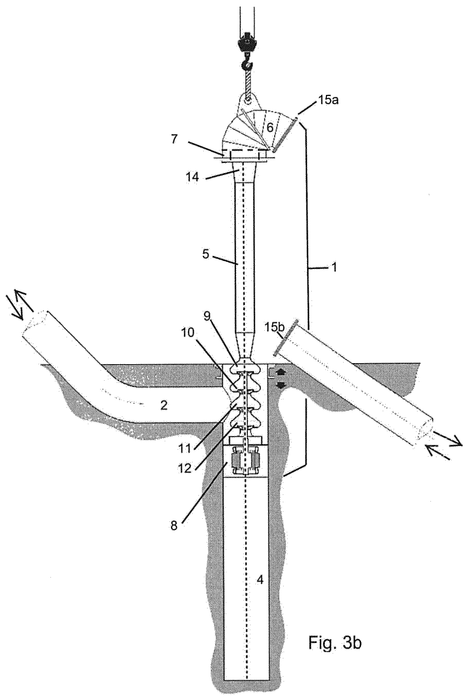

Referring to Figure 3a and Figure 3b, a reversible pump-turbine installation in accordance with the present invention is shown. No underground powerhouse is required. Instead, a vertical borehole or shaft 4 allows the pump-turbine and motor-generator assembly 1 to be installed, removed for maintenance as needed, and reinstalled, while providing the desired low height-of-setting of thee unit below tailwater. The height of setting must be sufficiently low that the plant cavitation coefficient (plant sigma) is greater than the critical cavitation coefficient (critical sigma), the cavitation coefficient being defined as the ratio of absolute pressure at the low-pressure side of the runner divided by the vapor pressure of water at the temperature of the water. Shaft 16 connects submersible motor-generator 8 to pump-turbine stages 9, 10, 11, and 12. Vertical tailwater conduit 5 connects to diffuser 14 above the point of entry of penstock 2. Pressure relief valve 7 is preferably mounted to removable manifold 6. Removable manifold 6 bolts down to foundation 13 and connects to tailrace conduit 3 at flange 15a. Tailrace conduit 3 leads to the lower reservoir not shown. It should be noted that the number of stages may be adjusted according to head, height of setting, speed, installation rating and other factors. Penstock 2 connects to upper reservoir 70. Tailrace conduit 3 connects to the lower reservoir 71. Water flows through outer annulus 17 of borehole 4 toward the upper reservoir 70 as a pump and towards the pump turbine 43.

It should be noted that the removable portion may be further divided into conveniently separable subassemblies 6, 7, 14 and 5. For example, the manifold 6 might be lifted off first, the vertical portion of the tailrace conduit 5 might be lifted next, and the pump-turbine stages 9, 10, 11, and 12 might be lifted last along with the motor-generator 8. In the case of a motor generator on top, the stator might be left in place while the rotor, shaft, and balance of the assembly might be lifted out last.

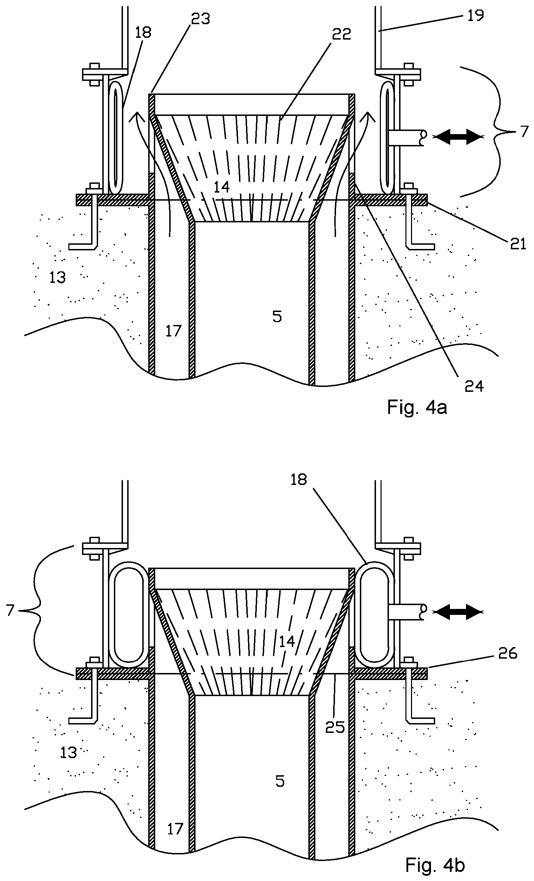

Referring to Figures 4a and 4b, a cross section of a pressure relief valve suitable of use in conjunction with the present invention is shown in its opened and closed positions respectively. Diffuser 14 is connected to ribs 25. Ribs 25, ring 23, and ring 24 together radially support bladder 18 on its inner diameter surface when its inflation pressure is greater than the pressure in shaft 17. Inflatable bladder 18 is supported from below by flange 26 and on its OD by enclosure 7. The air pressure in bladder 18 may be precisely adjusted to just stop leakage from shaft 17 into manifold 6 (at tailwater pressure).

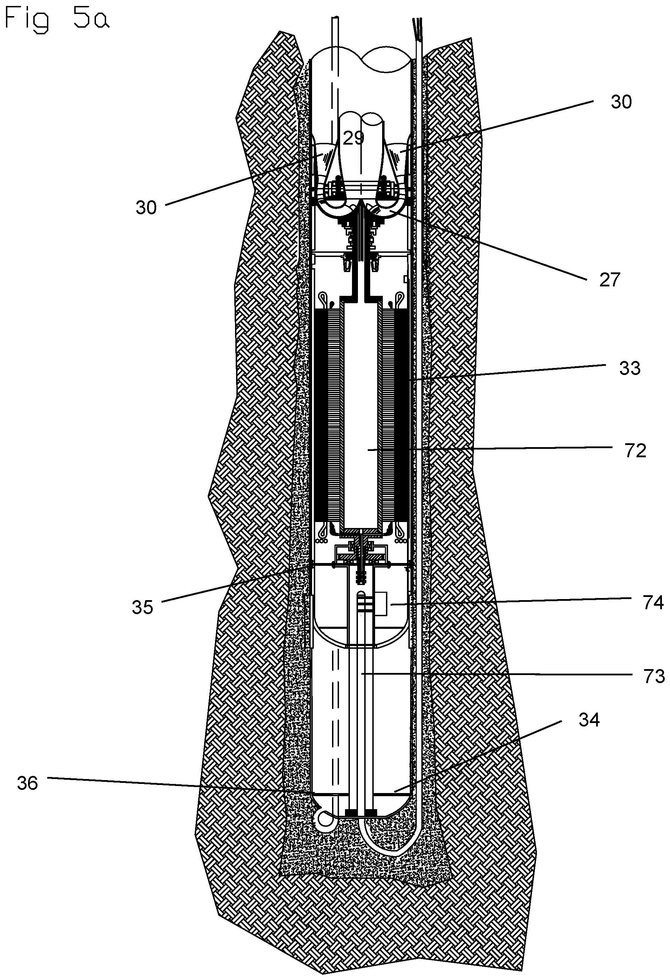

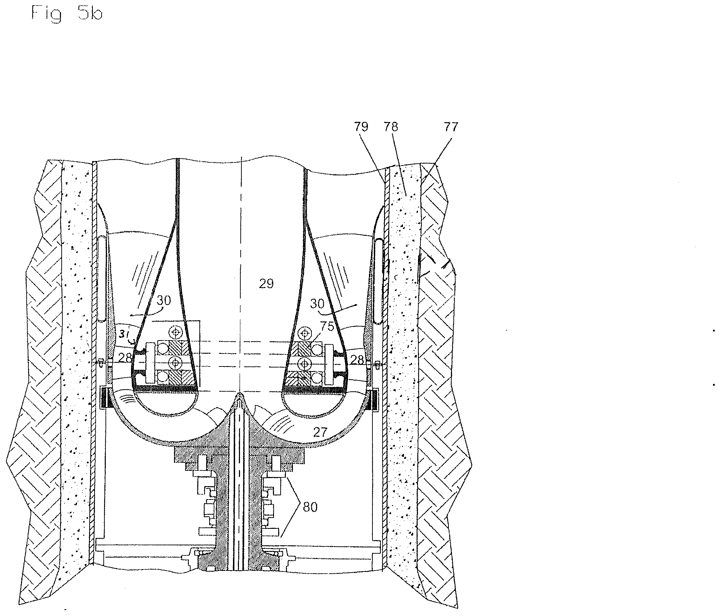

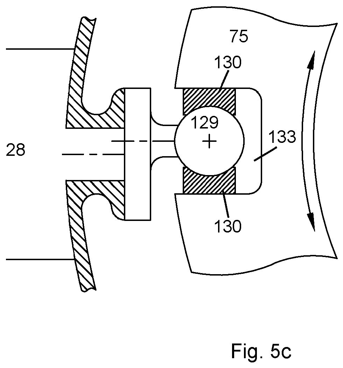

Referring to Figures 5a and 5b a sectional elevation of a pump-turbine in accordance with the present invention is shown. Runner 27 is designed around a toroidal flow path wherein water reverses direction by approximately 180 degrees in the meridional plane. Wicket gates 28 make up an axial flow distributor. Turbine diffuser 29 recovers turbine runner exit energy. Stay vanes 30 provide mechanical support to the distributor hub 31, turbine diffuser 29 as well as wicket gate servo system 32. Generator 33 is preferably located below the turbine. Hoisting piston 34 may be used to raise and lower, using water pressure, the entire pump-turbine assembly with connected draft tube segments, pressure relief valve and elbow. Hoisting piston 34 may incorporate upper seal ring 35 and lower seal ring 36 to maintain a seal while passing across the tailrace connection.

Hollow shaft 72 may be used as a heat pipe evaporator in conjunction with the runner 27 serving as a condenser. Electrical connector 73 engages electrical receptacle assembly 74 when the machine is lowered. Shifting rings 75 and 76 provide torque to actuate wicket gates 28.

Borehole 4 is associated with rock face 77, grout 78 and steel liner 79.

Shaft seal assembly 80 keeps the generator enclosure dry.

Piston assembly 34 supports generator 33 and pump-turbine 37 during raising and lowering. Valve 38 may be used to shut off water from penstock 39. Tailrace conduit 40 connects to tailwater. Cover assembly 41 is removable.

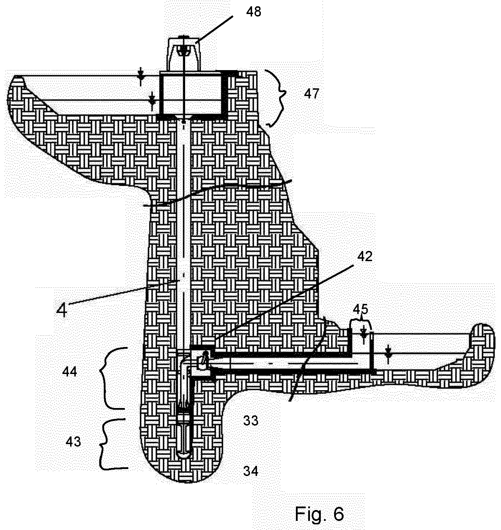

Referring to Figure 6, valve 42 may be used to fill vertical shaft 4 during hydraulic raising and lowering of pump-turbine-motor-generator assembly 43 with attached pipe, elbow, and pressure relief assemblies 44, Lower portal 45 serves to launch TBM during construction phase and serves as pumping inlet works. Headworks 47 serves as upper portal during construction and as service platform during maintenance. Crane 48 may be used to disassemble draft tube segments, elbow assembly and pressure relief valve from pump-turbine for maintenance.

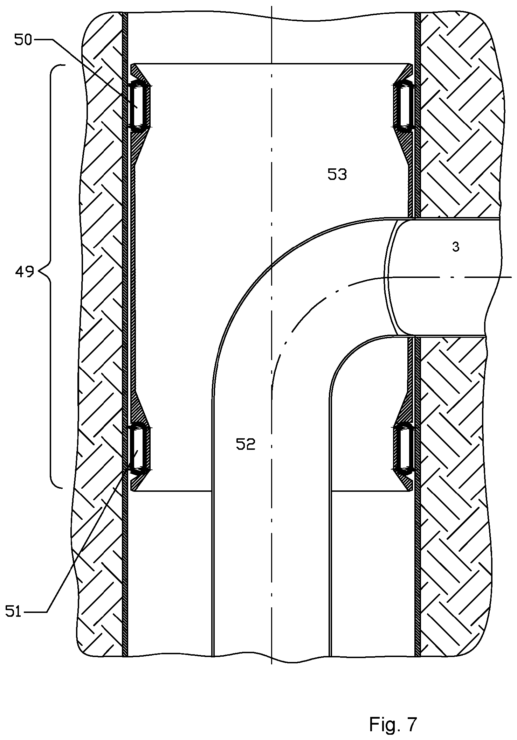

Referring to Figure 7 an elbow assembly 49 is shown. Inflatable seal 50 seals the upper end. Inflatable seal 51 closes the lower end. Elbow 52 directs flow to the tailrace conduit. Spool 53 travels with the pump-turbine during maintenance moves.

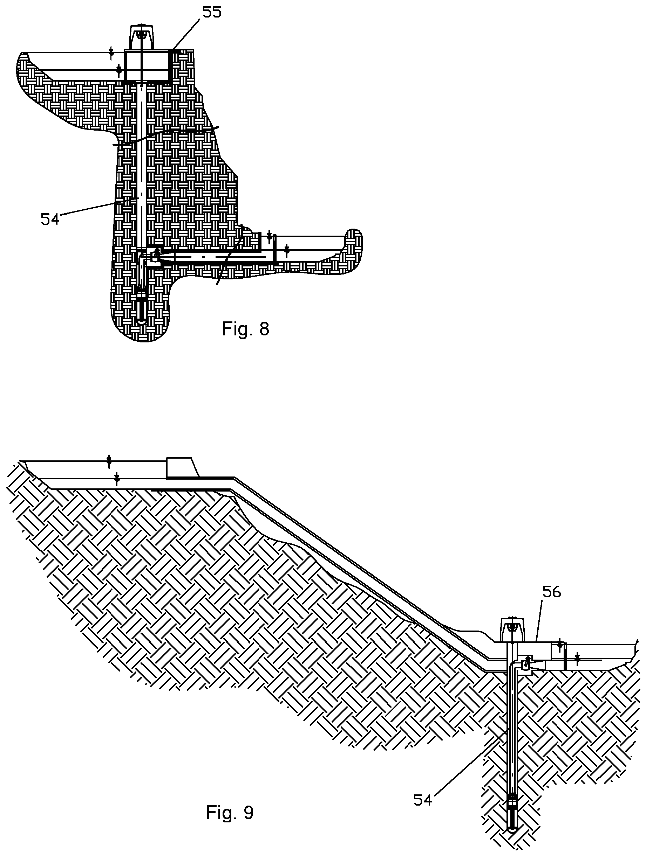

Referring to Figure 8 an installation is shown wherein the machine shaft 54 is located under the headworks 55.

Referring to Figure 9, the machine shaft 54 is located below the tailrace portal 56.

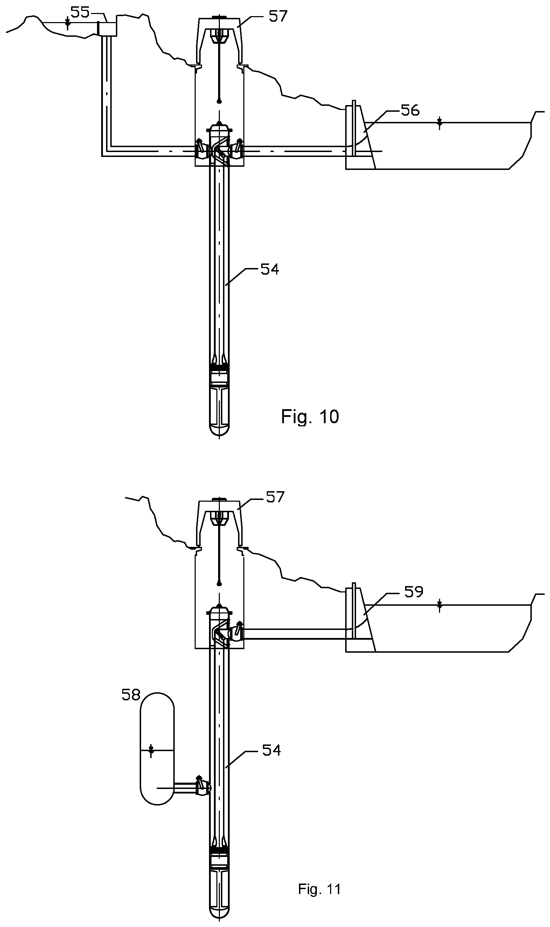

Referring to Figure 10, machine shaft 54 is located at a location between the headworks 55 and tailrace portal 56.

Referring to Figure 11, machine shaft 54 provides a connection to pressurized reservoir 58 as well as to tailrace tunnel 59.

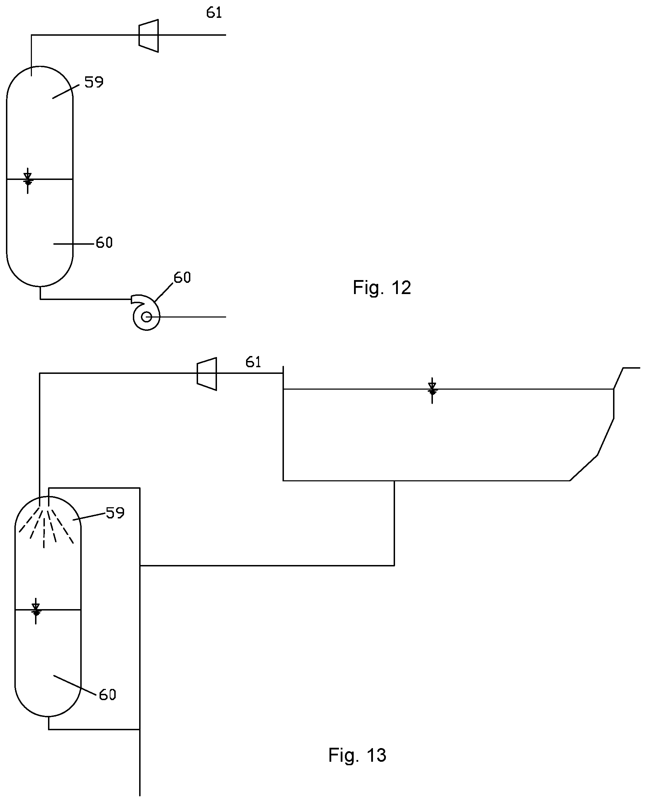

Referring to Figure 12 a pressurized water reservoir 58 is shown in conjunction with a pressurized air column 59. Pump or pump/turbine 60 may be in accordance with this invention or may be conventional. Air 59 may be fed to a gas turbine generator set 61.

Referring to Figure 13, spray cooling of the air being compressed may be used to provide isothermal air compression.

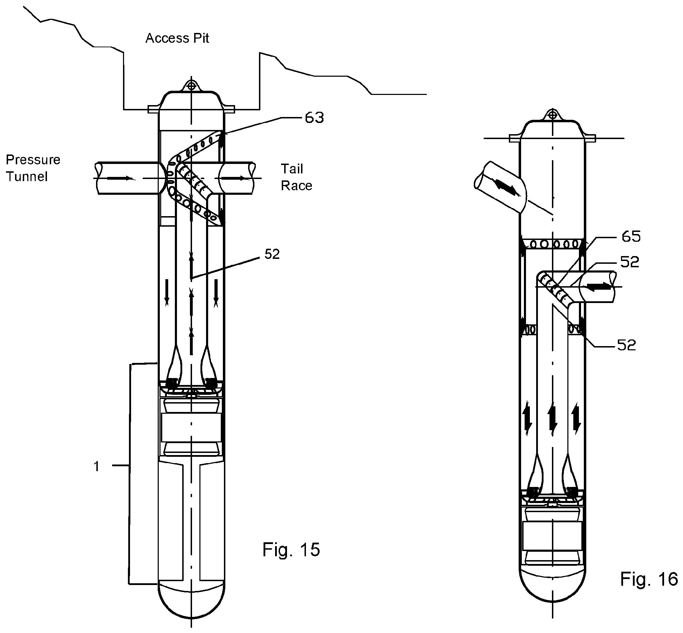

Figures 6, 7, 16, and 17 depict one of many possible construction sequences.

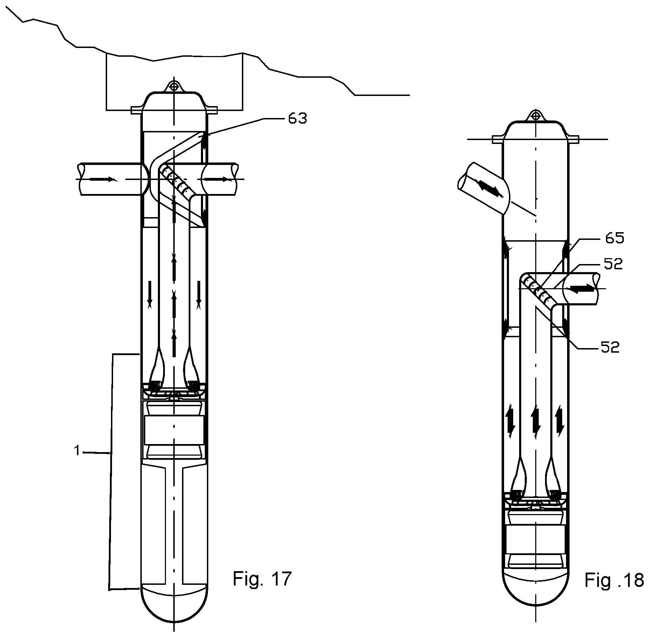

Referring to Figure 18, a combined seal and PRV 63 positioned in machine shaft 54 is shown in conjunction with elbow 52 and tailrace conduit 40. Machine shaft liner 64 is shown.

Referring to Figure 17, another embodiment is shown wherein inflatable seal 63 may also serve as a pressure relief valve.

Referring to Figure 18 another embodiment is shown with vanes 65 in elbow 52.

Referring to Figures 19a and 19b a runner for a pump or reversible pump turbine is shown wherein flow is directed along a smooth sinusoidal path within the meridional plane. Blades (vanes) impart circumferential acceleration vector and acceleration vectors within meridional plan to guide water through water passageway. Blade sequences may be normal to vector sum. The larger impellar is more efficient and provides higher head per stage. lmpellars may be best made by 3D printing.

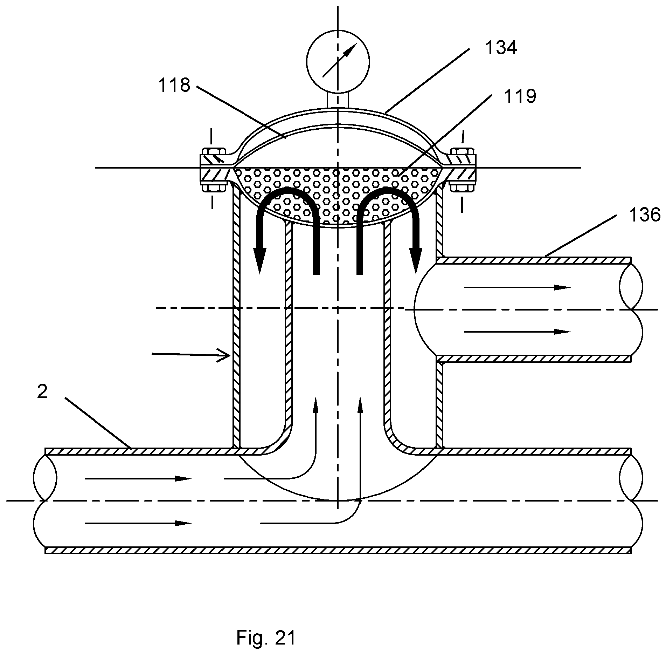

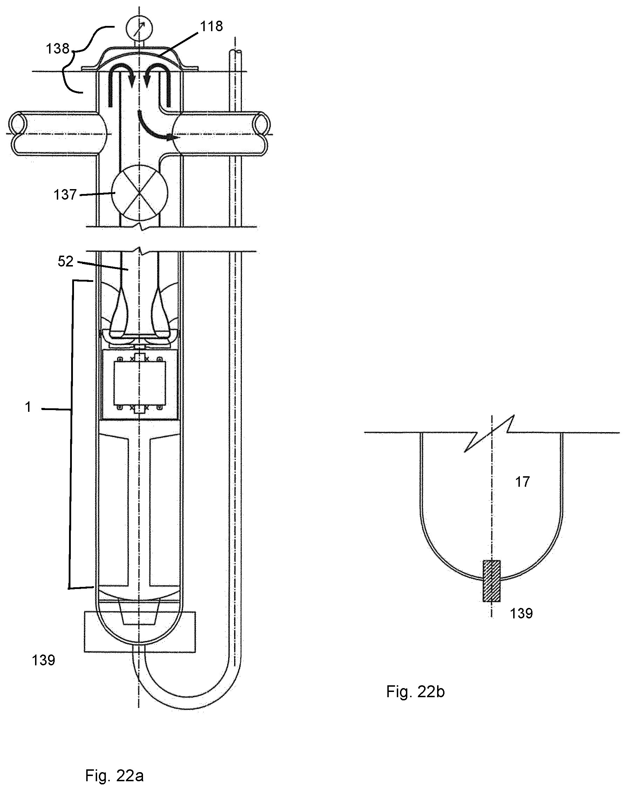

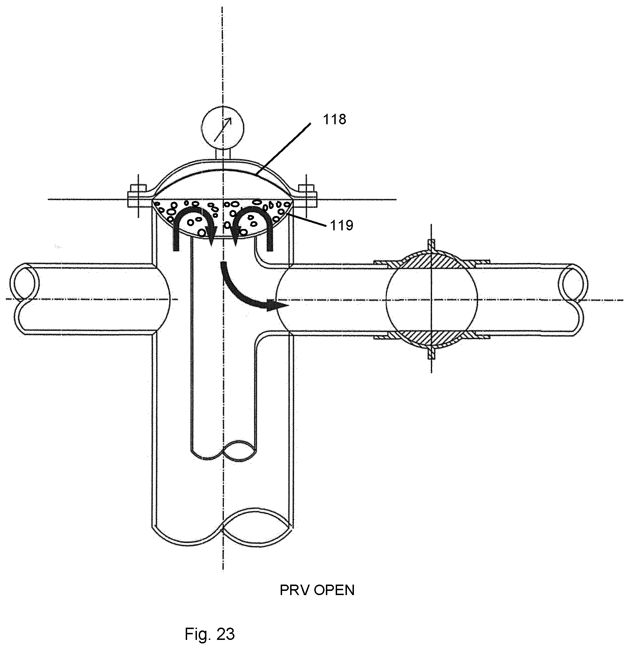

Referring to Figures 21-23, various pressure relief valve configurations are shown.

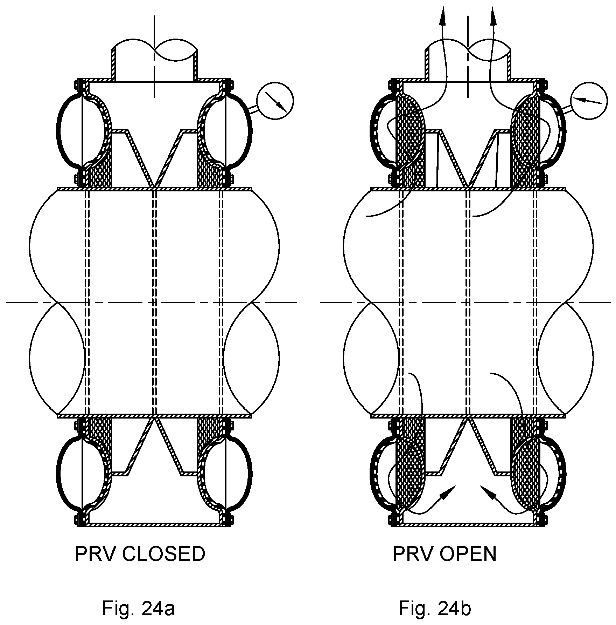

Referring to Figure 24 splitter vanes are used.

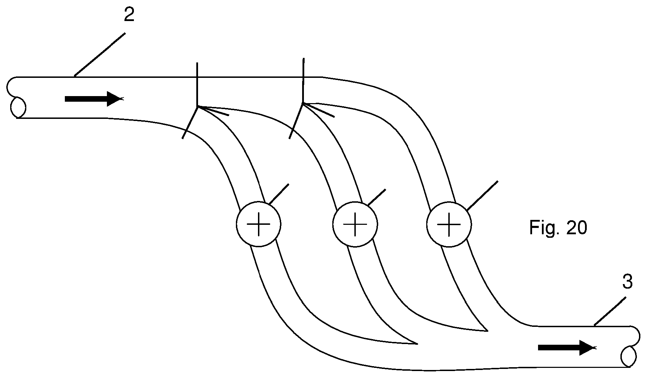

Referring to Figure 20, multiple pump turbines are shown sharing a common penstock 2 and tailrace conduit 3.

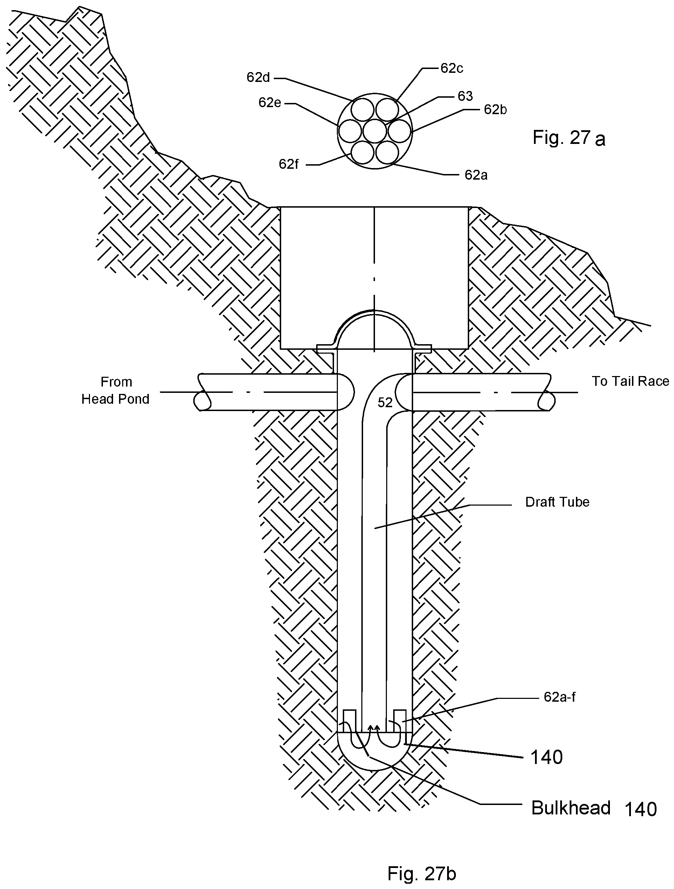

Referring to Figures 27A and 27b, multiple submersible pump-turbines 62a-62f, installed together in the same machine shaft 54 are shown.

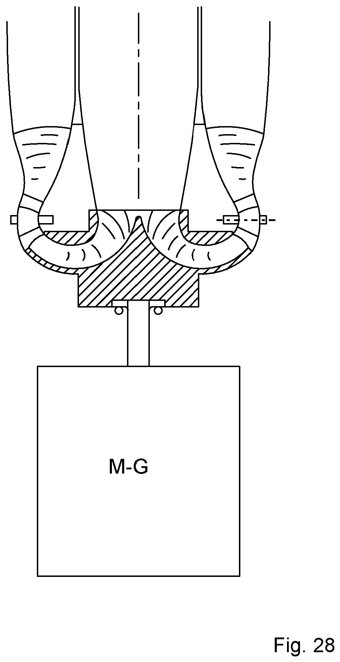

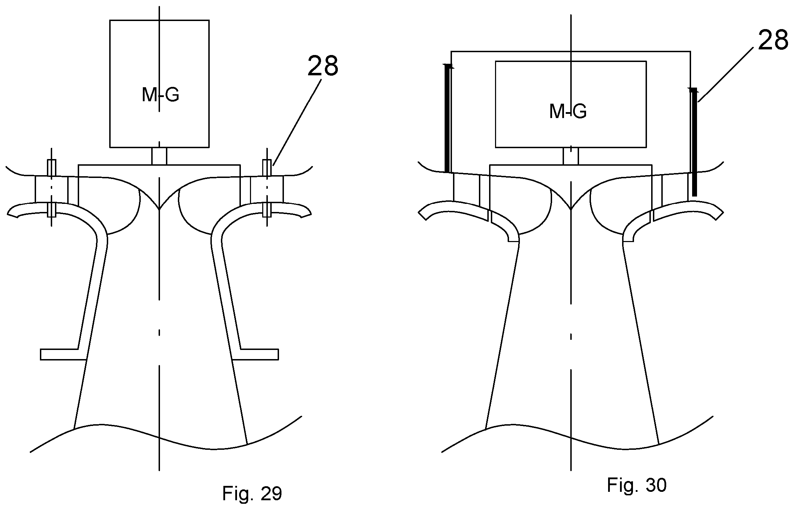

Figures 28 through 30 show pump-turbines configured for installation on a bulkhead in a common machine shaft.

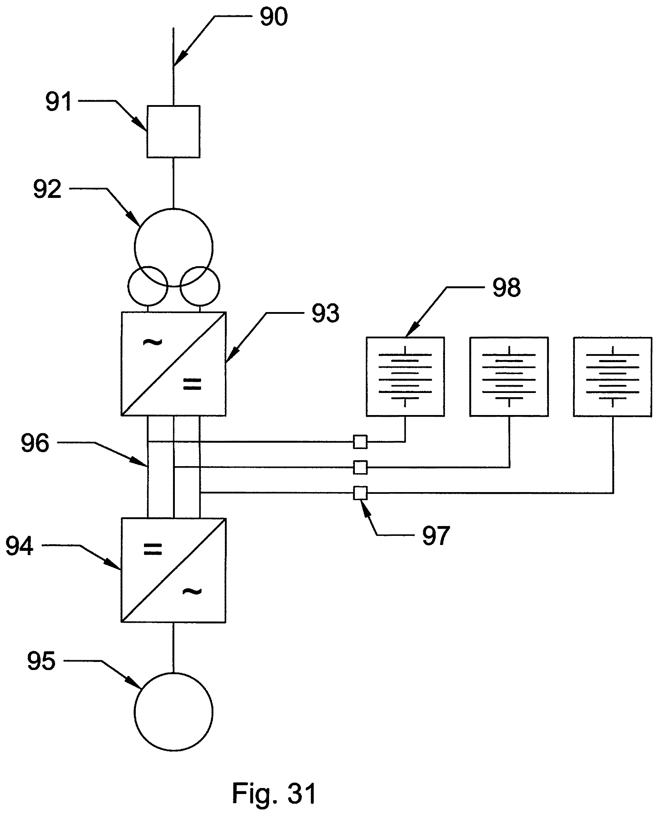

Referring to Figure 31, a medium/high voltage permanent-magnet motor/generator 95 and battery storage array 98 are connected to a utility grid 90 via a single cascade multilevel power converter. The power converter comprises a phase-shifting input transformer 92, power cells incorporating a regenerative-capable front-end 93, isolated DC buses 95, and load-side inverters 94. Each power cell DC bus is connected to a battery bank 98 via a disconnect switch 97.

The individual DC bus 96 voltages are actively managed during operation to charge or discharge the battery banks 98 independently of power consumption or generation by the motor/generator 95.

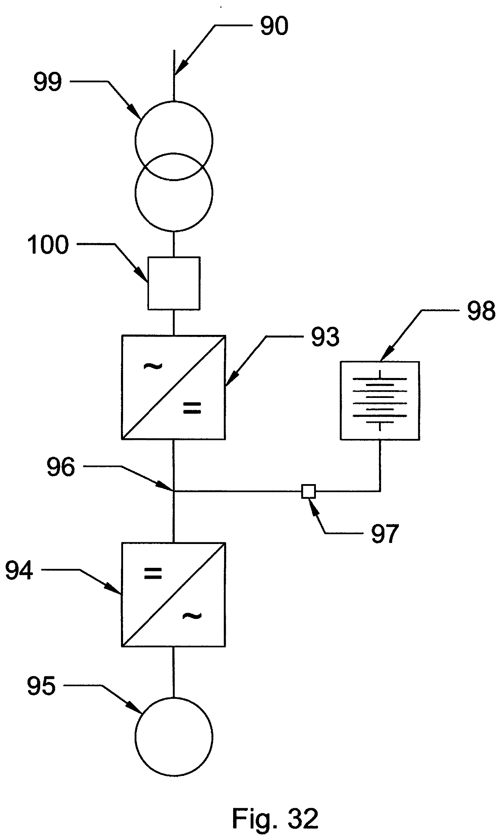

Referring to Figure 32, a low-voltage permanent-magnet motor/generator 95 and battery storage array 98 are connected to a utility grid 90 via a single two-level power converter. The power converter comprises an active front-end with line-side reactor 93, an intermediate DC bus 96, and a motor-side two-level inverter 94. The power converter is connected to the grid through a disconnect 100 and step-up transformer 99. The power converter DC bus 96 is attached to a battery array 98 through a disconnect switch 97. The DC bus 96 voltage is actively managed during operation to charge or discharge the battery array 98 independently of power consumption or generation by the motor/generator 95.

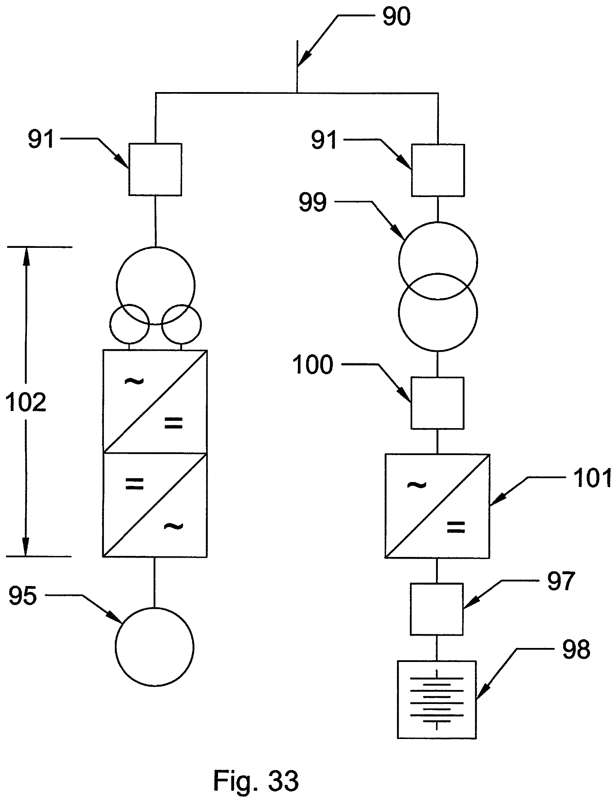

Referring to Figure 33, a permanent-magnet motor/generator 95 and battery storage array 98 are connected to a utility grid 90 using parallel and independent power converters. The converters may be connected using individual disconnects 91 incorporating protective functions. The motor/generator 95 is connected using a regenerative AC/AC power converter 102. The battery array 98 is connected through DC bus disconnect(s) 97 to a grid-tie inverter 101. A step-up transformer 99 increases inverter 101 output to grid voltage. Optionally, a disconnect 100 is placed between transformer 99 and the battery inverter 101.

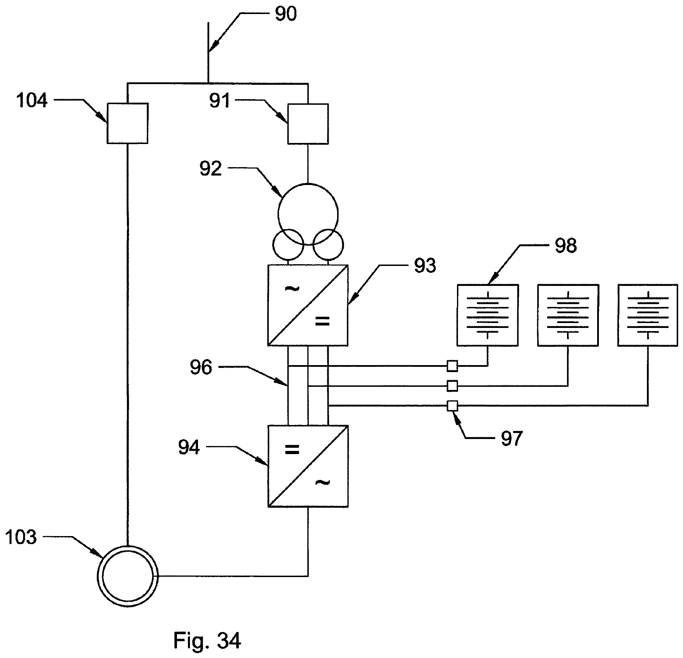

Referring to Figure 34, a medium/high voltage doubly-fed induction machine 103 and battery storage array 98 are connected to a utility grid 90. The rotor windings of the electric machine are connected to a cascade multi-level AC/AC drive with connected battery storage as described in FIG 31. The stator windings of the electric machine are connected to the grid through a disconnect 104.

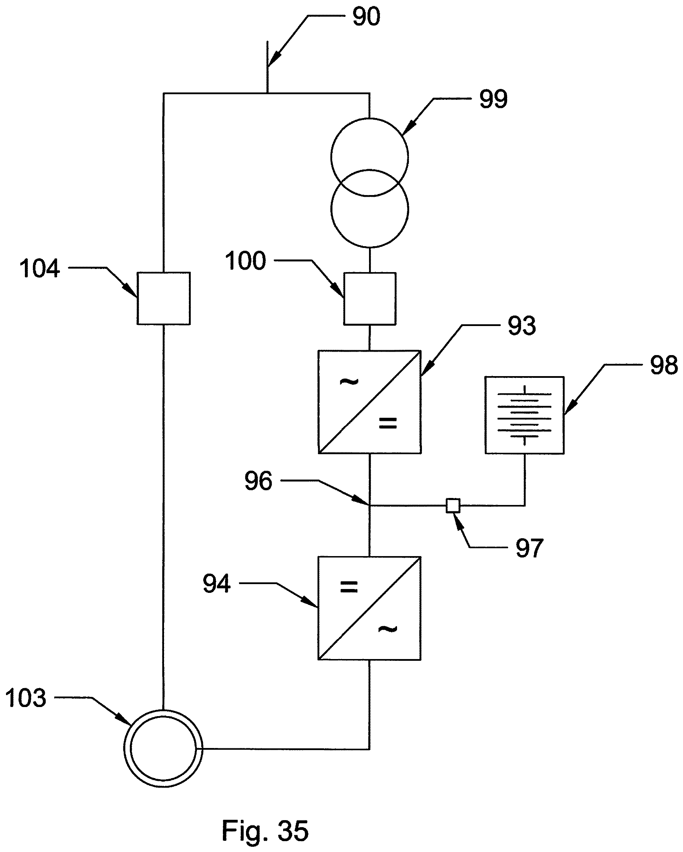

Referring to Figure 35, a medium/high voltage doubly-fed induction machine 103 and battery storage array 98 are connected to a utility grid 90. The rotor windings of the electric machine are connected to a low-voltage two-level AC/AC drive with connected battery storage as described in FIG 32. The stator windings of the electric machine are connected to the grid through a disconnect 104.

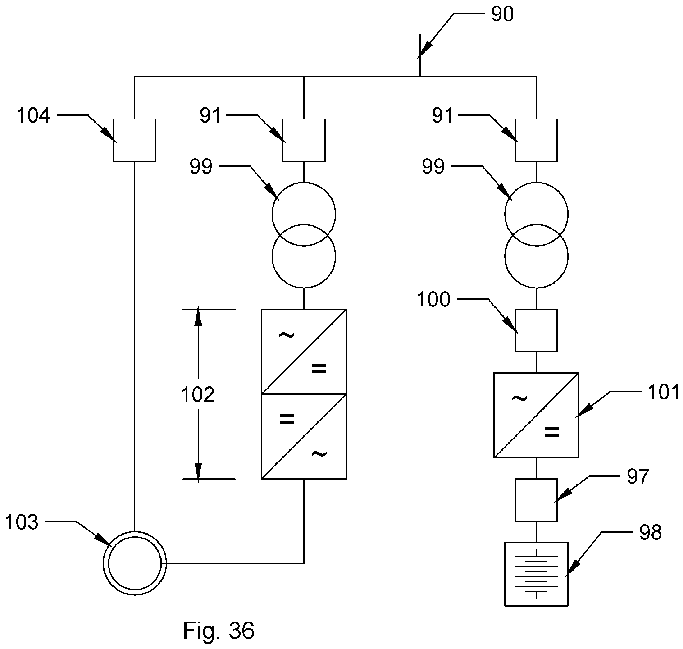

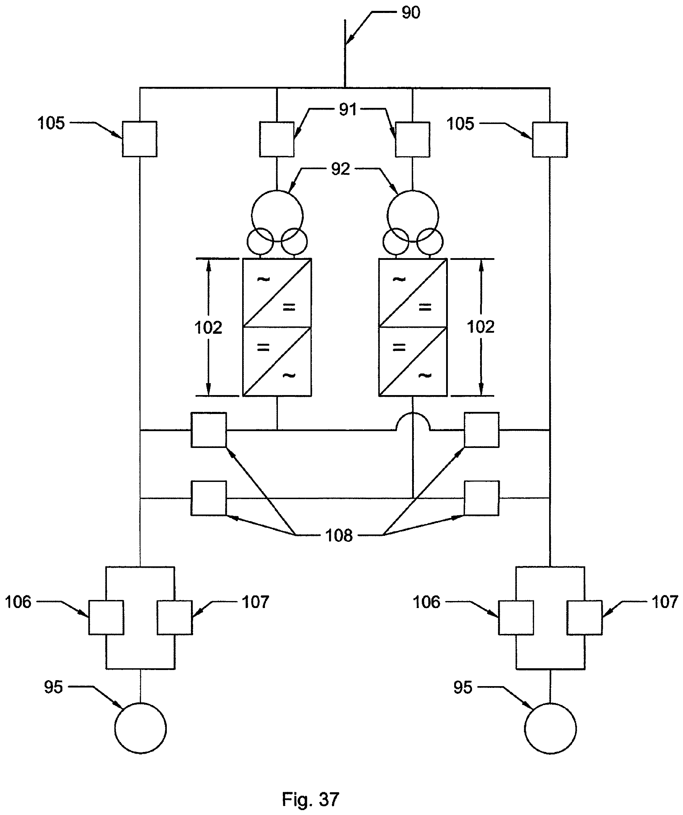

Referring to Figure 36, a medium/high voltage doubly-fed induction machine 103 and battery storage array 98 are connected to a utility grid 90. The rotor windings of the electric machine are connected to regenerative AC/AC drive 102. The stator windings of the electric machine are connected to the grid through a disconnect 104. The battery storage array is connected to a separate and independent DC/AC inverter 101 as described in FIG 33. Referring to Figure 37, multiple medium/high voltage permanent-magnet motor/generators 95 are connected to a utility grid 90 in an arrangement that allows either direct synchronous connection using direct on-line contactors 105 in conjunction with forward/reverse selecting contactors 106/107, which are interlocked to prevent simultaneous closure. Regenerative power converters 102 can be used to bring the electric machines up to synchronous speed in either the pumping or generating mode, or to operate at variable other-than-synchronous speeds. Phase- shift input transformers 92 connect the active front-end of the converters 102 to the grid via disconnects 91. A matrix of disconnects 108 allows any of the electric machines to be operated or started using any of the power converters.

The discussion included in this application is intended to serve as a basic description. The reader should be aware that the specific discussion may not explicitly describe all embodiments possible; many alternatives are implicit. It also may not fully explain the generic nature of the invention and may not explicitly show how each feature or element falling within the claims. Where the invention is described in device-oriented terminology, each element of the device implicitly performs a function. Apparatus claims may not only be included for the device described, but also method or process claims may be included to address the functions the invention and each element performs. Neither the description nor the terminology is intended to limit the scope of the claims included in this patent application.

Particularly, it should be understood that as the disclosure relates to elements of the invention, the words for each element may be expressed by equivalent apparatus terms or method terms-even if only the function or result is the same. As but one example, it should be understood that all actions may be expressed as a means for taking that action or as an element which causes that action. Similarly, each physical element disclosed should be understood to encompass a disclosure of the action which that physical element facilitates. Regarding this last aspect, as but one example, the disclosure of a "means for actuating" or an "actuator" should be understood to encompass disclosure of the act of "actuating "--whether explicitly discussed or not-and, conversely, were there effectively disclosure of the act of "actuating", such a disclosure should be understood to encompass disclosure of an "actuator" and even a "means for actuating". Such changes and alternative terms are to be understood to be explicitly included in the description.

A list of possibly useful reference materials is included on the next page.

| Patent Number | Kind Code | Issue Date | Name of Patentee or Applicant of cited Document |
|---|---|---|---|
| 4416328 | | 1983-11-22 | Baski |
| 8823195 | B2 | 2014-11-02 | Legacy |
| 6250887 | B1 | 2001-06-26 | Kuwabara et al. |
| 7092795 | B2 | 2006-08-15 | Kuwabara |
| 4538957 | | 1985-11-03 | Yamagata et al. |
| 8215104 | B2 | 2012-07-10 | Riley |
| 8193652 | B2 | 2012-06-05 | Paoli |
| 4272686 | | 1981-06-09 | Suzuki |
| 5561358 | | 1986-10-01 | Kuwabara et al. |
| 3614268 | | 1971-10-19 | Merenda |
| 4275989 | | 1981-06-30 | Gutierrez Atencio |
| 6820333 | B2 | 2004-11-23 | Shimmei et al. |
| 3810717 | | 1974-05-14 | Rakcevic |
| 3794456 | | 1974-02-26 | Jelusic |
| 4008010 | | 1977-02-15 | Fauconnet |
| 8193652 | B2 | 2012-06-05 | Paoli |
| 4496845 | | 1985-01-29 | Ensign et al. |
| 4217077 | | 1980-08-12 | Brear |
| 4431446 | | 1984-02-14 | Yamamoto et al. |
| 2246472 | | 1941-06-17 | Sharp |
| 9683540 | B2 | 2017-06-20 | Winkler et al. |
| 4214104 | | 1984-11-18 | Kawabara |
| 9494164 | B2 | 2016-11-15 | Baski |
| 8485250 | B1 | 2013-07-16 | Rose |
| 6311770 | B1 | 2001-11-06 | Mullis |

### US Patent s

### US Publications

| Publication Number | Kind Code | Publication Date | Name of Patentee or Applicant of cited Document |
|---|---|---|---|
| 20160341173 | A1 | 2016-11-24 | Coulon |
| 2008056083 | A3 | 2008-05-15 | Paoli |
| 20170023008 | A1 | 2017-01-26 | Kadowaki |
| 20180040226 | A1 | 2018-02-08 | Zhang et al. |

### Foreign Patents

| Foreign Patent Number | Country Code | Kind Code | Publication Date | Name of Patentee or Applicant of cited Document |
|---|---|---|---|---|
| 2017093016 | WO | A1 | 2017-08-06 | VOITH Patent GMBH |
| 103759069 | CN | A | 2014-04-30 | |
| 2013132098 | WO | A2 | 2013-12-09 | ABB Technology AG |
| 20040064666 | KA | A | 2004-07-19 | Cho |
| | | | | |
| 1289869 | CA | | 1991-10-01 | Morizot |

### Non-Patent Literature

| |
|---|
| ERICKSON, B, Future Directions in Wind Power Conversion Electronics, ECE Department, University of Colorado, Boulder, Downloaded 04/28/2018 |
| ABB VM1 Medium voltage vacuum circuit breakers with magnetic drive 12...24 kV - 630...4000 A - 16...50 kA, Brochure, copyright 2018 |
| SHUBBRA (MIEEE, LMIETE), MATLAB/Simulink Based Model for 25 kV AC Electric Traction Drive, International Journal of Engineering Research & Technology (IJERT) ISSN: 2278-0181IJERTV3IS051344, Vol. 3 Issue 5, May - 2014 |
| WANG, D; YANG, J; CHEN, Z; MAO, C; LU, J, A Transformerless Medium Voltage Multiphase Motor Drive System, Energies 2016, 9, 323; doi:10.3390/en9050323, 27 April 2016 |
| Allen-Bradley, Brochure, Understanding Regeneration, Publication 1336R-WP002A-EN-P - February 2001 |
| Getzlaff. Fundamentals of Magnetics, Copyright 2004 |
| Original Faesch & Piccard Design of Wheel-pit for Power House Number One, MAHARJAN, N; CHITRAKAR, S; KOIRALA, R, Design of Reversible Pump Turbine for its prospective application in Nepal, International Journal of Scientific and Research Publications, Volume 4, Issue 7, July 2014 |
| Five In focus - new pump storage schemes, December 2010 |
| INGRAM, E, Worldwide Pumped Storage Activity, Sept. 2010 |
| BEYER, T, Goldisthal Pumped-Storage Plant: More than Power Production, Hydrowprld.com, March 2007 |
| Estimating Reversible Pump-Turbine Characteristics, US Dept of the Interior Bureau of Reclamation, A Water Resources Technical Publication, Engineering Monograph No. 19, Dec. 1977 |
| Analysis of a Static Start-up Control Strategy for Pumped Storage Power Plant Unit, Physics Procedia, Volume 24, 2012 |
| HydraForce-RVCV56-20 - Relief Direct Acting, Anti-cavitation, 2013 |
| BUDNIS, A, Using Pumps as Power Recovery Turbines, WaterWorld |
| Transformer and Inductor Design Handbook-Chapter 1 |
| Eagle Mountain Pumped Storage Project No. 13123 |
| Final License Application, Volume 1 of 6, Exhibits A and B, Submitted to: Federal Energy Regulatory Commission, Submitted by: Eagle Crest Energy Company, June 2009 |
| Pumped storage machines, Reversible pump turbines, Ternary sets and Motor-generators, Voith Hydro Holding GmbH & Co. KG |
| LEVETT, D; FRANK, T, Cascade Topology-Based Medium Voltage Motor Drives: Operation Theory and Silicon Options; July 2017 |
| YANG, X; PATTERSON, D, HUDGINS, J, Digital Communication @ University of Nebraska, Lincoln, permanent Magnet Generator design and Control for LargeWind Turbines, 2012 |
| GE Power Generators, Brochure, November 2015 |
| Brochure, Edition 2018-01-15, Infinion Technologies AG |
| AN2011-05 Industrial IGBT Modules Explanation of Technical Information, V1.2 November 2015, |
| Brochure, DC to AC Converters, Introduction to Voltage Source Inverters, Version 2 EE IIT, Kharagpur 14 |
| Medium Voltage Switchgear & Products on the MV Network, Medium Voltage Switchgear & Products on the MV Network - Catalogue 2015 |
| MV7000 Reliable, high performance medium voltage drive, GE Power Conversion 2013 |
| Challenges and Opportunities For New Pumped Storage Development, White Paper, NHA Pumped Storage Development Council Challenges and Opportunities For New Pumped Storage Development |
| Yaskawa, MV1000 Specification Guide, (Rev 1) September 23rd , 2013 |
| SINAMICS Medium Voltage Drives, Seimens, Drives or Every Demand, Brochure, Published by Siemens AG 2016 Process Industries and Drives |
| MORAN, S, Multi-Megawatt Motor Drive Technology, 30 March 2009 |
| Toshiba Adjustable Speed Drives, Brochure, 2014 |
| Plueger PM Motor |

## Claims

1. A reversible pump-turbine (37) adapted to be located in a vertical shaft (17) from which it is removable and further comprising a removable manifold (6) fixed to the top of the shaft during operation wherein water flow to and from the reversible pump-turbine is through coaxial penstocks adapted to be positioned in the shaft (17) above the pump-turbine; and wherein said pump-turbine (37) comprises:
an impeller with a toroidal flow path through approximately 180 degrees in the meridional plane;
a diffuser-guide vane combination into which the impeller discharges; and
a tailrace connection (52).

2. The reversible pump-turbine of claim 1 wherein the removable manifold (6) includes a pressure relief valve (7) for relieving excess head pressure to a tailwater conduit (5).

3. The reversible pump-turbine of claim 2 wherein the pressure relief valve (7) is comprised of an elastomeric diaphragm held by controlled gas pressure against one or more orifices.

4. The reversible pump-turbine of claim 1, wherein the reversible pump-turbine (37) is removable from the vertical shaft (17) via a hoisting piston (34) attached to the reversible pump-turbine.

5. The reversible pump-turbine of claim 4, wherein the hoisting piston (34) is actuated by water pressure to raise and lower the reversible pump-turbine (37).

6. The reversible pump-turbine of claim 1, further comprising wicket gates (28) to axially distribute flow.

## Patentansprüche

1. Umkehrbare Pumpenturbine (37), die in einer vertikalen Welle (17) positioniert werden kann, aus welcher sie entfernbar ist, und ferner umfassend einen entfernbaren Verteiler (6), der während dem Betrieb oben an der Welle fixiert ist, wobei der Wasserfluss zu und von der umkehrbaren Pumpenturbine durch koaxiale Druckleitungen erfolgt, die in der Welle (17) oberhalb der Pumpenturbine positioniert werden können, und wobei die Pumpenturbine (37) folgendes umfasst:
einen Impeller mit einem kreisringförmigen Strömungspfad um ungefähr 180 Grad in der meridionalen Ebene;
eine Diffusor-Umlenkschaufel-Kombination, in welcher der Impeller ausstößt; und
eine Ableitungsverbindung (52).

2. Umkehrbare Pumpenturbine nach Anspruch 1, wobei der entfernbare Verteiler (6) ein Druckentlastungsventil (7) zur Entlastung von überschüssigem Kopfdruck in eine Ausgleichsleitung (5) umfasst.

3. Umkehrbare Pumpenturbine nach Anspruch 2, wobei das Druckentlastungsventil (7) eine elastomere Membran umfasst, die durch geregelten Gasdruck gegen eine oder mehrere Öffnungen gehalten wird.

4. Umkehrbare Pumpenturbine nach Anspruch 1, wobei die umkehrbare Pumpenturbine (37) über einen Hebekolben (34), der an der umkehrbaren Pumpenturbine angebracht ist, von der vertikalen Welle (17) entfernt werden kann.

5. Umkehrbare Pumpenturbine nach Anspruch 4, wobei der Hebekolben (34) durch Wasserdruck betätigt wird, um die umkehrbare Pumpenturbine (37) anzuheben und abzusenken.

6. Umkehrbare Pumpenturbine nach Anspruch 1, die ferner Leitschaufeln (28) zur axialen Strömungsverteilung umfasst.

## Revendications

1. Pompe-turbine réversible (37) conçue pour être placée dans un arbre vertical (17) duquel elle est amovible et comprenant en outre un collecteur amovible (6) fixé à la partie supérieure de l'arbre pendant le fonctionnement, l'écoulement d'eau vers et depuis la pompe-turbine réversible se faisant à travers des conduites forcées coaxiales conçues pour être placées dans l'arbre (17) au-dessus de la pompe-turbine ;
et ladite pompe-turbine (37) comprenant :
un rotor doté d'un trajet d'écoulement toroïdal sur environ 180 degrés dans le plan méridien ;
une combinaison diffuseur-aube fixe dans laquelle le rotor se déverse ; et
un raccordement de fuite (52).

2. Pompe-turbine réversible selon la revendication 1, le collecteur amovible (6) comprenant une soupape de surpression (7) pour soulager la pression de tête excessive vers un conduit de fuite (5).

3. Pompe-turbine réversible selon la revendication 2, la soupape de surpression (7) étant constituée d'un diaphragme en élastomère maintenu par une pression de gaz contrôlée contre un ou plusieurs orifices.

4. Pompe-turbine réversible selon la revendication 1, la pompe-turbine réversible (37) étant amovible de l'arbre vertical (17) par l'intermédiaire d'un piston de levage (34) fixé à la pompe-turbine réversible.

5. Pompe-turbine réversible selon la revendication 4, le piston de levage (34) étant actionné par la pression de l'eau pour lever et abaisser la pompe-turbine réversible (37).

6. Pompe-turbine réversible selon la revendication 1, comprenant en outre des aubes directrices (28) pour répartir axialement le débit.
